## Europäisches Patentamt

## European Patent Office

## Office européen des brevets

(11) Publication number: **0 048 594**
**B1**

# EUROPEAN PATENT SPECIFICATION

(45) Date of publication of patent specification: **13.05.87**

(51) Int. Cl.⁴: **C 08 K 5/00, C 08 L 23/12**

(21) Application number: **81304269.4**

(22) Date of filing: **17.09.81**

(54) Combination of phenolic antioxidant and stabiliser for use in organic materials.

(30) Priority: **18.09.80 US 188191**
**04.05.81 US 259868**

(43) Date of publication of application:
**31.03.82 Bulletin 82/13**

(45) Publication of the grant of the patent:
**13.05.87 Bulletin 87/20**

(84) Designated Contracting States:
**BE DE FR GB IT NL**

(56) References cited:
**EP-A-0 002 616**
**FR-A-2 398 089**
**US-A-4 046 737**
**US-A-4 206 111**

(73) Proprietor: **UNIROYAL, INC.**
**1230 Avenue of the Americas Rockefeller Center**
**New York, New York 10020 (US)**

(72) Inventor: **Paolino, Paula Ann**
**33 East Hill Road**
**Watertown Connecticut 06795 (US)**

(74) Representative: **Harrison, Michael Robert et al**
**URQUHART-DYKES & LORD 5th Floor Tower**
**House Merrion Way**
**Leeds LS2 8PA West Yorkshire (GB)**

The file contains technical information submitted after the application was filed and not included in this specification

**Description**

This invention relates to a combination of antioxidant and stabilizer for organic materials.

More particularly the invention relates to stabilizing compositions comprising a mixture of

(A) the phenolic antioxidant N,N'-bis[2-(3-[3,5-di-t-butyl-4-hydroxyphenyl]propionyloxy)ethyl]-oxamide with one of the following stabilizers:

(B$_1$) 2-hydroxy-4-n-octóxybenzophenone;

(B$_2$) 2-(3,5-di-t-butyl-2-hydroxyphenyl)-5-chlorobenzotriazole; or

(B$_3$) N-hydroxyethyl-2,2,6,6-tetramethylpiperidino succinic acid ester.

The protection of organic materials, especially polymers, normally subject to deterioration over a period of time by exposure to such adverse influences as the weather (especially ultraviolet light), by the addition of various antioxidants and stabilizers has previously been known, but it has been desired to provide more satisfactory protection in an economical and convenient manner.

Typical prior stabilization practices are illustrated in U.S. Patents 2,154,723, Hirsch et al., May 15, 1979; 4,187,212; Zinka et al, Feb. 5, 1980; and 4,104,248, Cantatore, Aug. 1, 1978.

The present invention is based on the surprising discovery that a remarkably high level of protection is achieved by employing a combination of the phenolic antioxidant (A) described above with one of the stabilizers (B) described above, as the stabilizer system.

The phenolic antioxidant (A) and the stabilizers (B) described above employed in the stabilizing mixtures of the invention are known materials.

The ratio of phenolic antioxidant compound (A) to stabilizer compound (B) employed in the mixed stabilizer composition of invention may vary widely, for example from 1:9 to 9:1, preferably from 2:8 to 8:2, and more preferably from 4:6 to 6:4, by weight.

To stabilize an organic material in accordance with the invention the material is mixed, by any suitable conventional means, with the phenolic antioxidant compound (A) and one of the described stabilizer compounds (B), separately or together, in a stabilizingly effective amount. Remarkably small quantities of the mixed stabilizer composition of the invention are effective, e.g. from 0.005% or less to 5% or more, preferably from 0.05 to 1%, more preferably from 0.1 to 0.5%, based on the weight of the material to be stabilized. The optimum amount in any given case will depend on such variables as the degree of stabilization desired, the particular material being stabilized etc., and is readily determinable with the aid of standard tests for evaluating stabilizers in various materials.

If desired, the stabilizer composition of the invention can be employed in combination with other stabilizers, e.g., dilauryl or distearyl beta-thiodipropionate, antiozonants, thermal stabilizers, ultraviolet light absorbers and/or with coloring materials, dyes, pigments, metal chelating agents, etc.

The organic materials which can be stabilized in accordance with this invention by admixing with phenolic antioxidant (A) and stabilizer (B) include polyolefins which can be homopolymers of unsubstituted olefinic hydrocarbons such as, e.g. ethylene, propylene, 1-butylene, 1,3-butadiene and styrene, homopolymers of substituted olefinic hydrocarbons such as, e.g. vinyl halides such as vinyl chloride and esters such as acetate, vinyl alcohols, acrylonitrile and methacrylonitrile, or copolymers of two or more of such substituted and/or unsubstituted olefinic hydrocarbons. Also included are condensation polymers such as, e.g. polyalkylene oxides, polyurethanes, polycarbonates, polyesters such as polyethylene terephthalates and polyamides such as polyhexamethylene adipamide and polycaprolactam. Other organic materials which can be stabilized by this invention include lubricating oils, e.g. of the aliphatic ester type such as di(2-ethylhexyl)azelate and pentaerythritol tetracaprolate, animal and vegetable derived oils such as linseed oil, fat tallow lard, peanut oil, cod liver oil, castor oil, palm oil, corn oil and cottonseed oil, fatty acids such as soaps, and other hydrocarbon material such as gasoline, mineral oil, fuel oil, drying oil, cutting fluids and waxes.

It is possible with the stabilizer mixture according to the invention to stabilize, for example, the following polyolefins:

1. polymers that are derived from singly unsaturated hydrocarbons, such as polyolefins, e.g. polyethylene of low and high density, which can optionally be crosslinked, polypropylene, polyisobutylene, polymethylbutene-1 and polymethylphentene-1;

2. mixtures of the homopolymers mentioned under 1, such as mixtures of polypropylene and polyethylene, polypropylene and polybutene-1, polypropylene and polyisobutylene;

3. copolymers of the monomers on which the homopolymers mentioned under 1 are based, such as ethylene/propylene copolymers, propylene/butene-1 copolymers, propylene/isobutylene copolymers, ethylene/butene-1 copolymers, as well as terpolymers of ethylene and propylene with a diene, such as hexadiene, di-cyclopentadiene or ethylidenenorbornene.

The following examples, in which all quantities are expressed by weight unless otherwise indicated, will serve to illustrate the practice of the invention in more detail.


Example 1

This example illustrates the stabilization of polypropylene resin with a combination of phenolic antioxidant and stabilizer identified as follows in Table I:

Phenolic antioxidant A:
N,N'-bis[2-(3-[3,5-di-t-butyl-4-hydroxyphenyl]propionyloxy)ethyl]oxamide, "BPEO".

Stabilizer $B_1$:
2-hydroxy-4-n-octoxybenzophenone, "HOBP".

The effectiveness of the stabilizer combinations is evaluated by observing changes in ultimate tensile strength upon prolonged exposure to simulated outdoor weathering conditions. Control stock containing no stabilizer (Run 1 in Table I), or the phenolic antioxidant component alone or stabilizer component alone (Runs 2 and 3 in Table I) are included for comparison with a stock of the invention containing both the phenolic antioxidant (A) and the stabilizer (B) (Run 4 in Table I).

The stocks represented in Table I are prepared by dry mixing in a Hobart [trademark] mixer 100 parts of unstabilized powdered polypropylene (average molecular weight about 72,000; "Profax 6501" [trademark]) with 0.1 part of the phenolic antioxidant A and 0.3 part of the stabilizer $B_1$. The mixtures are extruded on a 3.8 cm ($1\frac{1}{2}$") Davis Standard (trademark) extruder containing three screens (60/80/100 mesh 0.25/0.177/0.149 mm) and a 1.9 cm ($\frac{3}{4}$") bar die (length to diameter ratio 30:1). The extrusion is conducted with the following temperature profile: feed 193°; transition 197°, 204°; metering 210°, 215°; and die 221°C at 20 RPM. The extrudate is chopped and injection molded on an Ankerwerke (trademark) machine with rear, middle and front temperatures of 182°C, mold temperature at 52°C, into T-bars of dimensions 20.8 cm ($8\frac{1}{4}$") long by 0.3 cm ($\frac{1}{8}$") thick by 1.3 cm ($\frac{1}{2}$") wide. The T-bars are aged in an Atlas Sunshine Arc Weatherometer (trademark) model XW-W with conditions 63°C spray mist rate of 18 minutes every 2 hours. The samples are tested for tensile strength at break according to ASTM D638 Type I, dumbell specimens at a rate of 5 cm (2") per minute.

The results after 1200 hours exposure are shown in Table I.

The data in Table I indicate the marked improvement in retained tensile strength using the antioxidant/stabilizer in the combination of this invention rather than alone.

TABLE I
Aging of stabilized polypropylene

| Run No.: | 1 | 2 | 3 | 4 |
|---|---|---|---|---|
| **Composition (parts)** | | | | |
| Polypropylene | 100 | 100 | 100 | 100 |
| BPEO | — | .1 | — | .1 |
| HOBP | — | — | .3 | .3 |
| **Tensile strength MPa (psi)** | | | | |
| Aged 0 hrs. | 38.5 (5590) | 38.7 (5615) | 38.6 (5600) | 38.3 (5560) |
| 1200 hrs. | 24.2 (3510) | 24.1 (3500) | 28.0 (4070) | 37.0 (5370) |
| % change | −37.2 | −37.7 | −27.3 | −3.4 |

Example 2

Polypropylene resin, Profax 6501 (Trademark) was dry blended with antioxidant (A) [BPEO; N,N'-bis[2-(3-[3,5-di-t-butyl-4-hydroxyphenyl]propionyloxy)ethyl]oxamide] and/or stabilizer ($B_1$) [HOBP; 2-hydroxy-4-n-oxtoxybenzophenone] at the amounts indicated in Table II and then mixed in a Brabender (Trademark) mixer for five minutes at 400°F (204°C) and 25 RPM. A film was prepared by placing 7 g of compounded resin between ferro-type plates spaced apart by a 0.2 mm (10 mil) frame. The assembly was placed into a press, pre-heated for three minutes at 370°F (188°C), degassed several times and then kept for two minutes at 25,000 psi pressure. After quenching in cold water, the dried film was exposed in a Xenon weatherometer at 60—80°C, 50% relative humidity and at maximum UV irradiation of 280—300 nm, for periods of exposure indicated in Table II. The carbonyl index (CI) of the exposed samples was determined by infrared spectroscopy in this manner:

The optical density (OD) at 1720 cm⁻¹ (baseline tangential to the absorption minima at 1810 and 1580 cm⁻¹) measured and the following calculation carried out:

$$\text{CI (moles/l)} = \frac{\text{OD}}{\text{E} \cdot \text{S}}$$

Wherein E=Molar extinction coefficient (3,000 l/mol cm). S=Sample thickness, cm.

0 048 594

TABLE II

| Run No.: | 5 | 6 | 7 | Blank |
|---|---|---|---|---|
| Composition (parts) | | | | |
| Polypropylene | 100 | 100 | 100 | 100 |
| Antioxidant A | 0.1 | — | 0.05 | — |
| Stabilizer $B_1$ | — | 0.1 | 0.05 | — |
| Results | 1 | 2 | 3 | Blank |
| CI, Unaged | 36 | 31 | 34 | 37 |
| CI, Aged 202 hours | 55 | 50 | 50 | 344 |
| CI, Aged 428 hours | 846 | 469 | 121 | 2000+ |
| CI, Aged 600 hours | 1282 | 1321 | 937 | (Off scale) |

Carbonyl Index=reported number$\times 10^{-5}$

It will be apparent from the results shown in Table II that Run No. 7, which represents the invention and contained both (A) and ($B_1$), provided a synergistic effect in the form of remarkably reduced CI, as compared to Run No. 5 containing (A) alone and Run No. 6 containing ($B_1$) alone (all three runs containing the same total amount of protective material).

Example 3

This example illustrates the synergistic effect obtained with combinations of the phenolic antioxidant A (BPEO) with stabilizer $B_2$ ["TBCB"; 2-(3,5-di-t-butyl-2-hydroxyphenyl)-5-chlorobenzotriazole] as shown in Table III.

TABLE III

| Run No.: | 8[2] | 9 | 10 | Blank[3] |
|---|---|---|---|---|
| Composition (parts) | | | | |
| Polypropylene | 100 | 100 | 100 | 100 |
| BPEO | 0.1 | — | 0.05 | — |
| TBCB[1] | — | 0.1 | 0.05 | — |
| Results | | | | |
| CI, Unaged | 36 | 37 | 31 | 37 |
| CI, Aged 202 hours | 55 | 75 | 32 | 344 |
| CI, Aged 428 hours | 846 | 615 | 82 | 2000+ |
| CI, Aged 600 hours | 1282 | 639 | 483 | (Off scale) |

CI=reported number$\times 10^{-5}$

Remarks
[1] 2-(3,5-di-t-butyl-2-hydroxyphenyl)-5-chlorobenzotriazole.
[2] Same experiment as Table II Run 5.
[3] Same blank as in Table II.

The synergistic effect obtained with run 10 of the invention is apparent in Table III.

**Claims**

1. A stabilizing composition characterised in that it comprises a mixture of
(A) the phenolic antioxidant N,N'bis[2-(3-[3,5-di-t-butyl-4-hydroxyphenyl]propionyloxy)ethyl]oxamide with one of the following stabilizers:
($B_1$) 2-hydroxy-4-n-octoxybenzophenone,
($B_2$) 2-(3,5-di-t-butyl-2-hydroxyphenyl)-5-chlorobenzotriazole, or
($B_3$) N-hydroxyethyl-2,2,6,6-tetramethylpiperidino succinic acid ester.
2. A stabilizing composition according to Claim 1 characterised in that it is a mixture of (A) and ($B_1$).
3. A stabilizing composition according to Claim 1 characterised in that it is a mixture of (A) and ($B_2$).
4. A stabilizing composition according to Claim 1 characterised in that it is amixture of (A) and ($B_3$).
5. A stabilized composition comprising an organic material normally subject to deterioration upon

4

# 0 048 594

aging characterised in that the composition includes a stabilizing amount of a stabilizing composition as claimed in any of the preceding claims.

6. A stabilized composition according to Claim 5 characterised in that the said organic material is polypropylene.

7. A method of stabilizing an organic material normally subject to deterioration upon aging characterised in that the method comprises mixing said material with a stabilizingly effective amount of a stabilizer composition as claimed in any of Claims 1 to 4.

8. A method according to Claim 10 characterised in that said organic material is polypropylene.

## Patentansprüche

1. Stabilisierende Zusammensetzung, dadurch gekennzeichnet, daß sie aus einer Mischung

(A) des phenolischen Antioxidationsmittels N,N′-Bis[2-(3-[3,5-di-t-butyl-4-hydroxyphenyl]-propionyloxy)-ethyl]oxamid mit einem der folgenden Stabilisatoren:

($B_1$) 2-Hydroxy-4-n-octoxybenzophenon,

($B_2$) 2-(3,5-Di-t-butyl-2-hydroxyphenyl)-5-chlorobenzotriazol oder

($B_3$) N-Hydroxyethyl-2,2,6,6-tetramethylpiperidinobernsteinsäureester.

besteht.

2. Stabilisierende Zusammensetzung nach Anspruch 1, dadurch gekennzeichnet, daß sie eine Mischung von (A) mit ($B_1$) ist.

3. Stabilisierende Zusammensetzung nach Anspruch 1, dadurch gekennzeichnet, daß sie eine Mischung von (A) mit ($B_2$) ist.

4. Stabilisierende Zusammensetzung nach Anspruch 1, dadurch gekennzeichnet, daß sie eine Mischung von (A) mit ($B_3$) ist.

5. Stabilisierte Masse mit einem organischen Material, das normalerweise bei der Alterung einer Zersetzung unterliegt, dadurch gekennzeichnet, daß die Masse eine stabilisierende Menge einer stabilisierenden Zusammensetzung nach einem der vorhergehenden Ansprüche enthält.

6. Stabilisierte Masse nach Anspruch 5, dadurch gekennzeichnet, daß das erwähnte organische Material Polypropylen ist.

7. Verfahren zum Stabilisieren eines organischen Materials, das normalerweise bei der Alterung einer Zersetzung unterliegt, dadurch gekennzeichnet, daß bei dem Verfahren das erwähnte Material mit einer zum Stabilisieren wirksamen Menge einer stabilisierenden Zusammensetzung nach einem der Ansprüche 1 bis 4 vermischt wird.

8. Verfahren nach Anspruch 10, dadurch gekennzeichnet, daß das erwähnte organische Material Polypropylen ist.

## Revendications

1. Composition stabilisante caractérisée en ce qu'elle comprend un mélange de:

(A) L'antioxydant phénolique N,N′-bis-[2-(3-[3,5-di-t-butyl-4-hydroxyphényl]propionyloxy)-éthyl]oxamide avec l'un des stabilisants suivants:

($B_1$) 2-hydroxy-4-n-octoxybenzophénone,

($B_2$) 2-(3,5-di-t-butyl-2-hydroxyphényl)-5-chlorobenzotriazole, ou

($B_3$) ester de l'acide N-hydroxyéthyl-2,2,6,6-tétraméthylpipéridino succinique.

2. Composition stabilisante selon la revendication 1, caractérisée en ce que c'est un mélange de (A) et ($B_1$).

3. Composition stabilisante selon la revendication 1, caractérisée en ce que c'est un mélange de (A) et ($B_2$).

4. Composition stabilisante selon la revendication 1, caractérisée en ce que c'est un mélange de (A) et ($B_3$).

5. Composition stabilisée comprenant une matière organique normalement sujette à une détérioration lors d'un vieillissement, caractérisée en ce que la composition contient une quantité stabilisante d'une composition stabilisante selon l'une quelconque des revendications précédentes.

6. Composition stabilisée selon la revendication 5, caractérisée en ce que ladite matière organique est du polypropylène.

7. Méthode de stabilisation d'une matière organique normalement sujette à une détérioration lors d'un vieillissement, caractérisée en ce que la méthode consiste à mélanger ladite matière à une quantité efficace du point de vue stabilisation d'une composition stabilisante selon l'une quelconque des revendications 1 à 4.

8. Méthode selon la revendication 10, caractérisée en ce que ladite matière organique est du polypropylène.

5